# FASCICULE DE BREVET EUROPEEN

(11) **EP 4 148 254 B1**
(45) Date de publication et mention de la délivrance du brevet: **10.07.2024**
(21) Numéro de dépôt: 22194436.6
(22) Date de dépôt: 07.09.2022
(51) Int. Cl.: F02C 7/24, F02K 1/82, B64C 1/40, F16B 21/16, F16B 5/06, B64C 7/02

(54) **ENSEMBLE POUR UNE NACELLE D'AÉRONEF ET COMPORTANT UN PANNEAU SUPPORT, UNE PROTECTION THERMIQUE ET UN SYSTÈME DE FIXATION**
BAUGRUPPE FÜR EINE LUFTFAHRZEUGGONDEL, DIE EINE HALTEPLATTE, EINEN WÄRMESCHUTZ UND EIN BEFESTIGUNGSSYSTEM UMFASST
ASSEMBLY FOR AN AIRCRAFT NACELLE COMPRISING A SUPPORT PANEL, HEAT PROTECTION AND AN ATTACHMENT SYSTEM

(30) Priorité: 10.09.2021 FR 2109535
(43) Date de publication de la demande: 15.03.2023
(73) Titulaire: AIRBUS OPERATIONS, 31060 Toulouse Cedex 9 (FR)
(72) Inventeur: PIARD, Frédéric, 31060 TOULOUSE (FR); CZAPLA, Lionel, 31060 TOULOUSE (FR)
(74) Mandataire: Cabinet Le Guen Maillet

(56) Documents cités:
- WO-A1-2015/155477
- US-A- 4 016 914
- US-A1- 2014 255 182
- US-A1- 2015 232 190

## Description

### DOMAINE TECHNIQUE

La présente invention concerne un ensemble pour une nacelle d'un moteur d'aéronef comportant un panneau support, une protection thermique et un système de fixation qui assure la fixation de la protection thermique sur le panneau support, une nacelle d'un moteur d'aéronef comportant au moins un tel ensemble, ainsi qu'un aéronef comportant au moins une telle nacelle.

### ÉTAT DE LA TECHNIQUE ANTÉRIEURE

Un aéronef comporte classiquement au moins un turboréacteur double flux qui comporte un moteur constituant un noyau logé dans une nacelle. La nacelle comporte une structure interne fixe (également appelée IFS « Internal Fixed Structure » en Anglo-saxon) entourant le moteur et des capots extérieurs disposés autour de la structure interne fixe.

La structure interne et les capots extérieurs délimitent entre eux un canal secondaire dans lequel circule un flux secondaire d'air provenant d'une entrée d'air disposée à l'avant de la nacelle, tandis qu'un flux primaire circule dans le moteur.

La structure interne est soumise à de très fortes températures du fait de la proximité du moteur et il est donc souhaitable d'y fixer des protections thermiques.

Un système de fixation pour panneaux d'aéronefs selon l'art antérieur est connu dans le document US4016914A.

### EXPOSÉ DE L'INVENTION

Un objet de la présente invention est de proposer un ensemble pour une nacelle d'un moteur d'aéronef comportant un panneau support comme par exemple un panneau d'une structure interne, une protection thermique et un système de fixation qui assure la fixation de la protection thermique sur le panneau support, où la fixation s'effectue de manière simple et rapide.

À cet effet, est proposé un ensemble comportant :
- un panneau support d'une structure interne fixe d'une nacelle d'un turboréacteur double flux,
- une protection thermique en contact avec le panneau support au niveau d'une surface de contact, et
- une pluralité de systèmes de fixation assurant la fixation amovible de la protection thermique au panneau support,

où pour chaque système de fixation, la protection thermique présente un trou qui la traverse,
où chaque système de fixation comporte :
   - une pièce femelle logée dans le trou correspondant, et présentant une embase solidaire du panneau support et une paroi cylindrique délimitant un espace libre et ouvert à l'opposé du panneau support, où la paroi cylindrique présente un épaulement circulaire qui fait saillie vers l'intérieur de la paroi cylindrique, et
   - une pièce mâle comportant un fourreau inséré dans la paroi cylindrique et percé d'un alésage principal, un coulisseau mobile en translation dans l'alésage principal et une pluralité de billes, où pour chaque bille, le fourreau présente un alésage secondaire perpendiculaire à l'alésage principal et qui débouche d'un premier côté dans ledit alésage principal et d'un deuxième côté à l'extérieur du fourreau, où chaque bille est placée dans l'alésage secondaire correspondant et est mobile en translation le long dudit alésage secondaire entre une position de verrouillage dans laquelle la bille déborde au niveau du deuxième côté et une position de déverrouillage dans laquelle la bille ne déborde pas au niveau du deuxième côté, où pour chaque bille, le coulisseau comporte une alvéole prenant la forme d'une demi-bille, et où le coulisseau est mobile en translation entre une position de blocage dans laquelle le coulisseau est dans une position telle que les alvéoles ne sont pas en vis-à-vis des billes et telle que les billes sont forcées en position de verrouillage, et une position de déblocage dans laquelle le coulisseau est dans une position telle que les alvéoles sont en vis-à-vis des billes autorisant les billes à passer en position de déverrouillage et où la pièce mâle comporte également un chapeau solidaire du fourreau et qui vient en appui contre la face de la protection thermique du côté opposé à la surface de contact.

Un tel ensemble permet une fixation simple et rapide de la protection thermique sur le panneau support, permettant également un démontage aisé en cas de besoin.

Avantageusement, le passage de la position de blocage à la position de déblocage du coulisseau consiste en un enfoncement du coulisseau dans le fourreau, le coulisseau porte une butée et le fourreau présente une chambre dans laquelle se déplace la butée et dont une face constitue une contre-butée contre laquelle la butée vient en appui en position de blocage, et le coulisseau présente, en position de blocage, une extrémité qui dépasse du chapeau et qui est traversée par un perçage dans lequel un moyen de verrouillage est inséré.

Selon un mode de réalisation particulier, pour chaque pièce femelle, l'ensemble comporte une rondelle de forme cylindrique qui s'emmanche sur la pièce femelle pour combler l'espace entre le panneau support et la protection thermique au niveau du trou.

Selon un mode de réalisation particulier, pour chaque pièce femelle, l'ensemble comporte un oeillet qui est positionné le long des bords du trou correspondant de la protection thermique, qui s'emmanche sur la paroi cylindrique correspondante et vient en appui contre l'embase.

Selon un mode de réalisation particulier, chaque pièce mâle est solidaire de la protection thermique.

Selon un mode de réalisation particulier, pour chaque pièce femelle, l'ensemble comporte une rondelle de forme cylindrique qui s'emmanche sur la pièce femelle pour combler l'espace entre le panneau support et la protection thermique au niveau du trou, la protection thermique comporte sur sa face orientée contre le chapeau, une plaque de soutien collée sur ladite face et le chapeau est fixé à l'oeillet et à la plaque de soutien.

Selon un mode de réalisation particulier, la protection thermique comporte sur sa face orientée contre le chapeau, une plaque de soutien collée sur ladite face et le chapeau est fixé à la plaque de soutien.

Avantageusement, la pièce mâle comporte un moyen de rappel qui contraint le coulisseau en position de verrouillage.

L'invention propose également une nacelle d'un turboréacteur double flux, ladite nacelle comportant une structure interne fixe et un ensemble selon l'une des variantes précédentes, où le panneau support est un panneau de la structure interne fixe.

L'invention propose également un aéronef comportant au moins une nacelle selon la variante précédente.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue en perspective d'une partie d'une nacelle selon l'invention,
[Fig. 3] est une vue en coupe d'un ensemble selon un premier mode de réalisation de l'invention en position assemblée,
[Fig. 4] est une vue similaire à celle de la Fig. 3 en position déverrouillée,
[Fig. 5] est une vue similaire à celle de la Fig. 3 en position désassemblée,
[Fig. 6] est une vue similaire à celle de la Fig. 3 pour un deuxième mode de réalisation de l'invention,
[Fig. 7] est une vue similaire à celle de la Fig. 3 pour un troisième mode de réalisation de l'invention,
[Fig. 8] est une vue similaire à celle de la Fig. 3 pour un quatrième mode de réalisation de l'invention,
[Fig. 9] est une vue similaire à celle de la Fig. 3 pour une variante de l'invention,
[Fig. 10] est une vue en coupe d'une pièce femelle selon une première variante, et
[Fig. 11] est une vue en coupe d'une pièce femelle selon une deuxième variante.

### EXPOSÉ DÉTAILLÉ DE MODES DE RÉALISATION

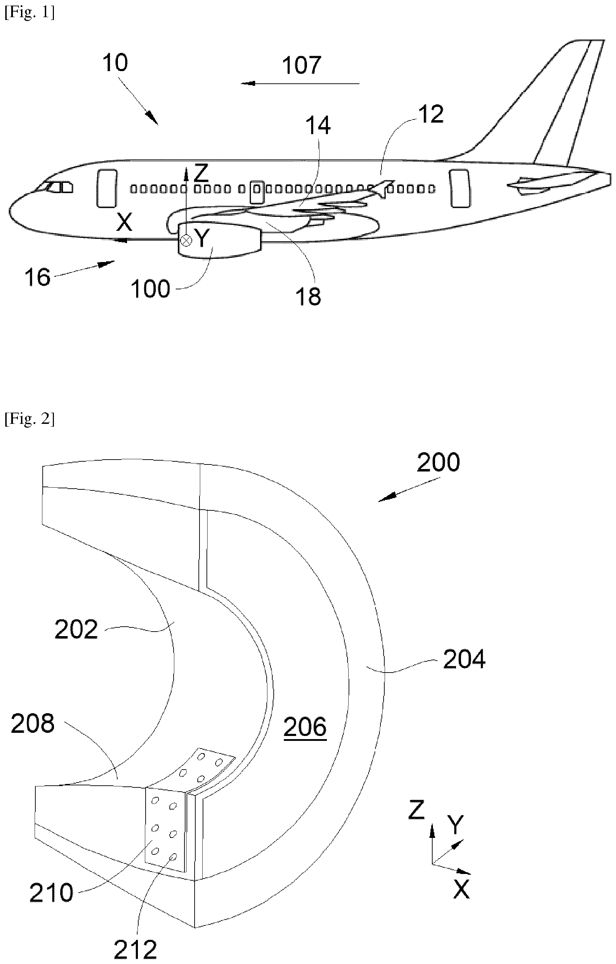

Dans 1a description qui suit, les termes relatifs à une position sont pris en référence au sens d'avancement d'un aéronef représenté par la flèche 107 de la Fig. 1.

La Fig. 1 montre un aéronef 10 qui comporte un fuselage 12 de chaque côté duquel est fixée une aile 14 qui porte au moins un turboréacteur double flux 16 soutenu par un mât 18 qui assure la fixation du turboréacteur double flux 16 sous l'aile 14.

Dans la description qui suit, et par convention, on appelle X l'axe longitudinal du turboréacteur double flux 16 qui est parallèle à l'axe longitudinal de l'aéronef 10 et orienté positivement vers l'avant de l'aéronef 10, on appelle Y l'axe transversal qui est horizontal lorsque l'aéronef 10 est au sol, et Z l'axe vertical lorsque l'aéronef 10 est au sol, ces trois axes X, Y et Z étant orthogonaux entre eux.

Le turboréacteur double flux 16 comporte une nacelle 100 et un moteur formant un noyau qui est logé à l'intérieur de la nacelle 100 qui comporte classiquement deux modules fixés au mât 18 de part et d'autre d'un plan médian vertical XZ.

La Fig. 2 montre schématiquement un module 200 de la nacelle 100. Le module 200 comporte entre autres une structure interne fixe 202 (également appelée IFS « Internal Fixed Structure » en Anglo-saxon) entourant le moteur et des capots extérieurs 204 disposés autour de la structure interne fixe 202.

La structure interne 202 et les capots extérieurs 204 délimitent entre eux un canal secondaire 206 dans lequel circule un flux secondaire d'air provenant d'une entrée d'air disposée à l'avant de la nacelle 100.

La structure interne 202 est constituée, entre autres, d'un panneau support 208 qui entoure le moteur et qui est soumis à de fortes températures. Dans le cadre de l'invention, la protection du panneau support 208 est assurée par des protections thermiques 210.

Dans le mode de réalisation de l'invention, présenté ici, une seule protection thermique 210 est représentée, mais une pluralité de telles protections thermiques 210 sont fixées pour recouvrir la surface du panneau support 208 à protéger.

Chaque protection thermique 210 prend la forme d'un panneau additionnel fixé au panneau support 208 par l'intermédiaire d'une pluralité de systèmes de fixation 212 et réalisé dans un matériau thermiquement isolant.

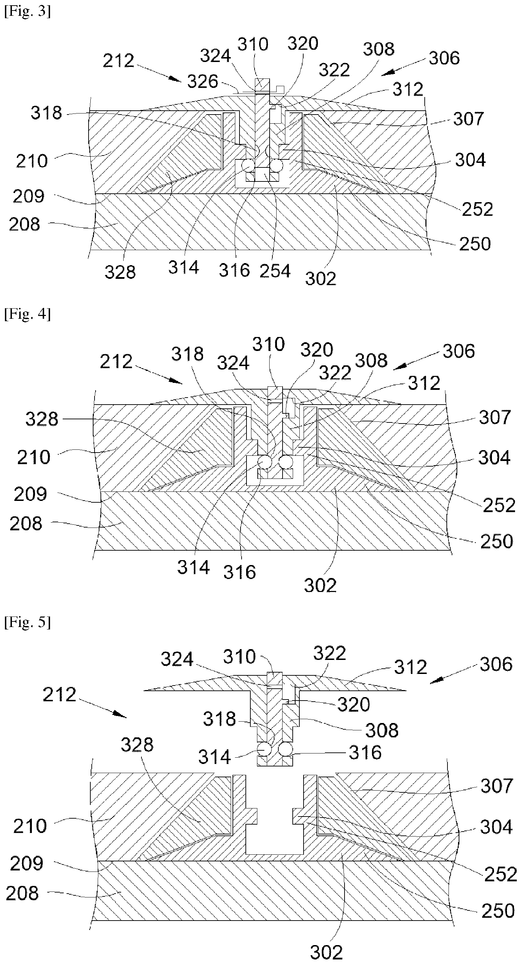

Les Figs. 3 à 5 montrent un premier mode de réalisation de l'invention dans différentes positions d'assemblage. La protection thermique 210 et le panneau support 208 sont en contact l'un contre l'autre au niveau d'une surface de contact 209.

Le système de fixation 212 comporte une pièce femelle 302 qui est ici une pièce de révolution autour d'un axe de révolution globalement perpendiculaire au panneau support 208 et qui présente une paroi cylindrique 252 délimitant un espace libre et une embase 250 solidaire du panneau support 208 et de la paroi cylindrique 252. La paroi cylindrique 252 est de révolution autour de l'axe de révolution et présente une ouverture orientée à l'opposé du panneau support 208. La paroi cylindrique 252 présente à l'intérieur un épaulement 304 circulaire autour de l'axe de révolution qui fait saillie vers l'intérieur de la paroi cylindrique 252.

Comme cela est expliqué ci-dessous, l'épaulement 304 est prévu pour permettre la mise en place de billes à l'arrière de l'épaulement 304 par rapport à l'ouverture. L'épaulement 304 est donc à distance du fond de la pièce femelle 302 correspondant à l'embase 250.

Pour permettre la mise en place de chaque pièce femelle 302, la protection thermique 210 présente un trou 307 qui la traverse parallèlement à l'axe de révolution.

Le système de fixation 212 comporte une pièce mâle 306 qui est également ici de révolution autour de l'axe de révolution.

La pièce mâle 306 comporte un fourreau 308 qui s'insère dans la pièce femelle 302, et plus précisément dans l'espace libre délimité par la paroi cylindrique 252 pour assurer la fixation de la protection thermique 210 au panneau support 208. Le fourreau 308 est percé d'un alésage principal 254 coaxial avec l'axe de révolution et la pièce mâle 306 comporte un coulisseau 310 mobile en translation dans l'alésage principal 254. La pièce mâle 306 comporte également un chapeau 312 solidaire du fourreau 308 et qui vient en appui contre la face de la protection thermique 210 du côté opposé à la surface de contact 209.

La pièce mâle 306 comporte également une pluralité de billes 314 réparties angulairement autour de l'axe de révolution.

Pour chaque bille 314, le fourreau 308 présente un alésage secondaire 316 perpendiculaire à l'alésage principal 254 et qui débouche d'un premier côté dans ledit alésage principal 254 et d'un deuxième côté à l'extérieur du fourreau 308. Chaque bille 314 est placée dans l'alésage secondaire 316 correspondant et est ainsi mobile en translation le long dudit alésage secondaire 316 entre une position de verrouillage (Fig. 3) dans laquelle la bille 314 déborde au niveau du deuxième côté et est donc en saillie par rapport au fourreau 308 et une position de déverrouillage (Figs. 4 et 5) dans laquelle la bille 314 ne déborde pas au niveau du deuxième côté et est donc rentrée à l'intérieur du fourreau 308.

Pour éviter la perte de la bille 314 au niveau du deuxième côté, le diamètre de l'alésage secondaire 316 au niveau dudit deuxième côté est inférieur au diamètre de la bille 314 tout en assurant la sortie du fourreau 308 d'une partie de la bille 314.

Pour chaque bille 314, le coulisseau 310 comporte une alvéole 318 prenant la forme d'une demi-bille qui s'enfonce dans le coulisseau 310.

Le coulisseau 310 est mobile en translation entre une position de blocage et une position de déblocage. En position de blocage (Fig. 3), le coulisseau 310 est dans une position telle que les alvéoles 318 ne sont pas en vis-à-vis des billes 314. Les billes 314 sont alors contre le coulisseau 310 ce qui force les billes 314 en position de verrouillage et en position de déblocage (Figs. 4 et 5), le coulisseau 310 est dans une position telle que les alvéoles 318 sont en vis-à-vis des billes 314 autorisant les billes 314 à passer en position de déverrouillage.

Le principe de mise en place du système de fixation 212 consiste à placer la protection thermique 210 contre le panneau support 208 avec la pièce femelle 302 dans le trou 307.

La pièce mâle 306 est approchée de la pièce femelle 302 avec le coulisseau 310 en position de déblocage et les billes 314 en position de déverrouillage (Fig. 5). Le fourreau 308 est introduit par l'ouverture dans la paroi cylindrique 252 jusqu'à amener les billes 314 sous l'épaulement 304 (Fig. 4) et enfin le coulisseau 310 est déplacé en position de blocage (Fig. 3) de manière à forcer les billes 314 en position de verrouillage sous l'épaulement 304 de manière à bloquer la pièce mâle 306.

Le passage de la position de déblocage à la position de blocage s'effectue ici par un retrait limité du coulisseau 310 du côté du chapeau 312.

En même temps, le chapeau 312 est en appui contre la face de la protection thermique 210 du côté opposé à la surface de contact 209, assurant ainsi la fixation de la protection thermique 210 au panneau support 208 par prise en sandwich de la protection thermique 210 entre le chapeau 312 et le panneau support 208.

À l'inverse le démontage consiste à partir de la position de verrouillage et de blocage (Fig. 5), à déplacer (ici enfoncer) le coulisseau 310 vers la position de déblocage (Fig. 4) ce qui libère les billes 314 qui sont libres de passer en position de déverrouillage, puis à retirer la pièce mâle 306 (Fig. 5) en tirant sur la pièce mâle 306.

Le montage et le démontage de la protection thermique sont donc relativement simples et rapides.

L'ensemble selon l'invention constituant une partie de la nacelle 100 comporte alors le panneau support 208, la protection thermique 210 et la pluralité de systèmes de fixation 212.

Dans le mode de réalisation des Figs. 3 à 5, le passage de la position de blocage à la position de déblocage du coulisseau 310 consiste en un enfoncement du coulisseau 310 dans le fourreau 308 et, à l'inverse, le passage de la position de déblocage à la position de blocage du coulisseau 310 consiste en une sortie du coulisseau 310 du fourreau 308 au niveau du chapeau 312.

Pour éviter la sortie du coulisseau 310 au-delà de la position de blocage, le coulisseau 310 porte une butée 320 et le fourreau 308 présente une chambre dans laquelle se déplace la butée 320 et dont une face constitue une contre-butée 322 contre laquelle la butée 320 vient en appui en position de blocage.

Pour empêcher un enfoncement non souhaité du coulisseau 310, le coulisseau 310 présente, en position de blocage, une extrémité qui dépasse du chapeau 312 et qui est traversée par un perçage 324 dans lequel un moyen de verrouillage 326, tel qu'une goupille, est inséré. Le passage vers la position de déblocage nécessite alors le retrait préalable du moyen de verrouillage 326.

Dans le mode de réalisation des Figs. 3 à 5, l'ensemble comporte également une rondelle 328 de forme cylindrique avec un trou central pour permettre l'emmanchement sur la pièce femelle 302, et plus particulièrement sur la paroi cylindrique 252, pour combler l'espace entre le panneau support 208 et la protection thermique 210 au niveau du trou 307. La rondelle 328 est réalisée dans un matériau thermiquement isolant. Ici, la rondelle 328 prend la forme d'un tronc de cône avec un trou central.

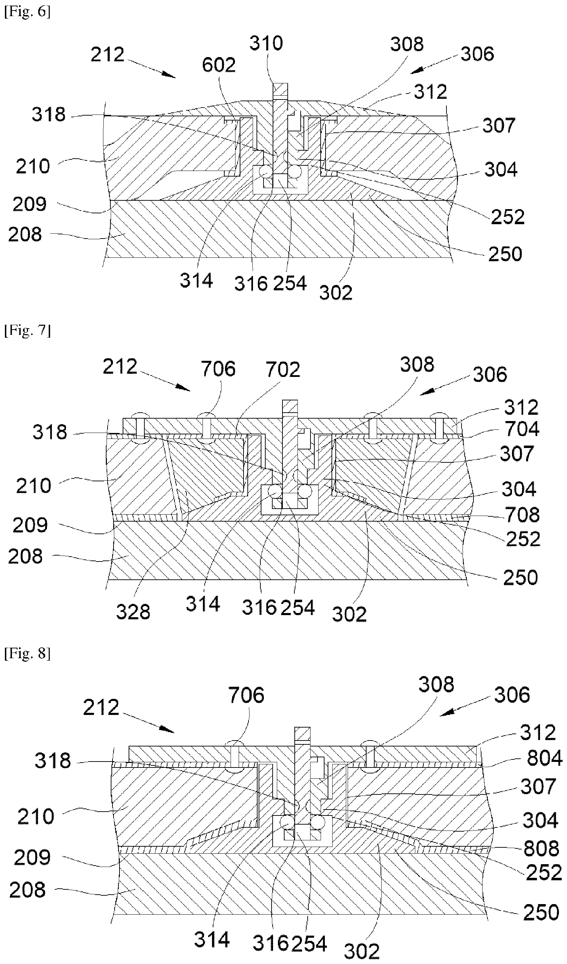

Dans le deuxième mode de réalisation de l'invention représenté à la Fig. 6, pour chaque pièce femelle 302, l'ensemble comporte un oeillet 602 qui est positionné le long des bords du trou 307 correspondant de la protection thermique 210. Cet oeillet 602 s'emmanche sur la paroi cylindrique 252 correspondante et vient en appui contre l'embase 250. L'oeillet 602 comporte deux flasques qui sont disposés de part et d'autre de la protection thermique 210 et un cylindre qui solidarise les deux flasques.

Dans le troisième mode de réalisation de l'invention représenté à la Fig. 7 et dans le quatrième mode de réalisation de l'invention représenté à la Fig. 8, chaque pièce mâle 306 est solidaire de la protection thermique 210. Ici la solidarisation est réalisée par des rivets 706.

Dans le troisième mode de réalisation de l'invention représenté à la Fig. 7, pour chaque pièce femelle 302, l'ensemble comporte un oeillet 702 qui est positionné le long des bords du trou central correspondant de la rondelle 328. Comme précédemment, cet oeillet 702 s'emmanche sur la paroi cylindrique 252 correspondante et vient en appui contre l'embase 250.

En outre, la protection thermique 210 comporte sur sa face orientée contre le chapeau 312, une plaque de soutien 704, du type plaque métallique, collée sur ladite face.

Le chapeau 312 est fixé à l'oeillet 702 et à la plaque de soutien 704.

Dans le mode de réalisation de l'invention présenté ici, la protection thermique 210 comporte sur sa face orientée contre le panneau support 208, une autre plaque de soutien 708, du type plaque métallique, collée sur ladite face.

Dans le quatrième mode de réalisation de l'invention représenté à la Fig. 8, la protection thermique 210 comporte sur sa face orientée contre le chapeau 312, une plaque de soutien 804, du type plaque métallique, collée sur ladite face et le chapeau 312 est fixé à la plaque de soutien 804.

Dans le mode de réalisation de l'invention présenté ici, la protection thermique 210 comporte sur sa face orientée contre le panneau support 208, une autre plaque de soutien 808, du type plaque métallique, collée sur ladite face.

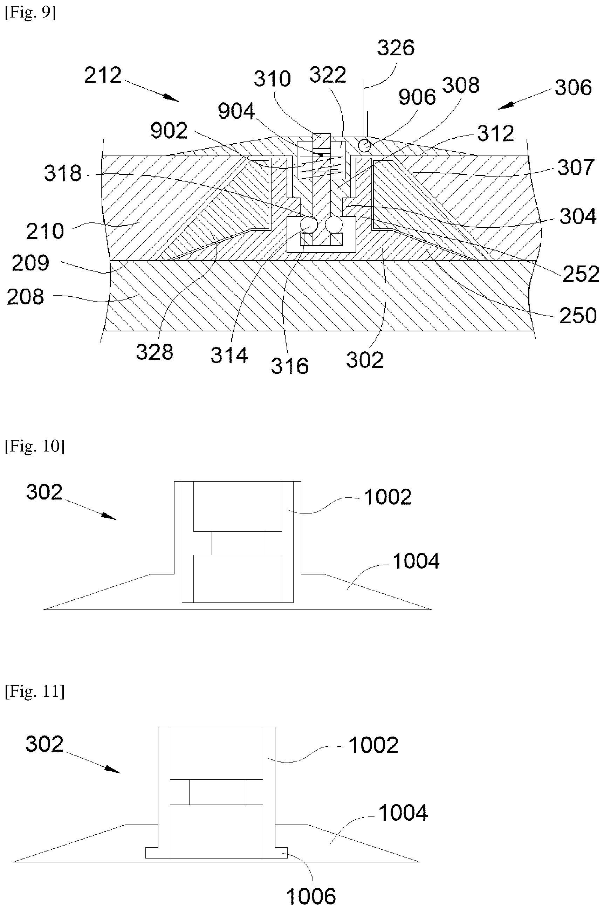

Dans une variante de réalisation de l'invention représentée à la Fig. 9, la pièce mâle 306 comporte un moyen de rappel 902, ici un ressort hélicoïdal, qui contraint le coulisseau 310 en position de blocage. Le moyen de rappel 902 facilite également la sortie du coulisseau 310.

Dans le mode de réalisation de l'invention présenté ici, le moyen de rappel 902 est logé dans la chambre portant la contre-butée 322 et il est contraint entre une paroi de ladite chambre et un élément du coulisseau 310, ici un plot 904.

Bien que ce moyen de rappel 902 soit présenté sur un ensemble particulier, il s'applique aux différents modes de réalisation présentés ci-dessus.

Le chapeau 312 comporte également un trou de garde 906 qui permet l'accrochage du moyen de verrouillage 326 lorsqu'il n'est pas logé dans le perçage 324 évitant ainsi de le perdre et permettant de se servir du moyen de verrouillage 326 pour tirer sur le chapeau 312.

Bien que ce trou de garde 906 soit présenté sur un ensemble particulier, il s'applique aux différents modes de réalisation présentés ci-dessus.

Dans les modes de réalisation des Figs. 3 à 9, la pièce femelle 302 est une pièce monobloc et mono-matière, par exemple en métal ou en matériau composite.

La Fig. 10 et la Fig. 11 montrent deux variantes de réalisation de la pièce femelle 302 dans lesquelles la paroi cylindrique 252 et l'épaulement 304 sont réalisés par un insert métallique 1002 et l'embase 250 est réalisée par un socle 1004 réalisé en matériau composite.

Dans le mode de réalisation de la Fig. 10, le socle 1004 est surmoulé autour de l'insert 1002 pour assurer la fixation de l'insert 1002.

Dans le mode de réalisation de la Fig. 11, l'insert 1002 présente une collerette 1006 qui s'étend à l'extérieur de l'insert 1002 et qui est noyé dans le socle 1004 pour assurer la fixation de l'insert 1002.

Dans chacun des modes de réalisation décrits ci-dessus, la fixation de l'embase 250 est réalisée par exemple par collage au panneau composite 208.

## Revendications

1. Ensemble comportant :
- un panneau support (208) d'une structure interne fixe (202) d'une nacelle (100) d'un turboréacteur double flux (106),
- une protection thermique (210) en contact avec le panneau support (208) au niveau d'une surface de contact (209), et
- une pluralité de systèmes de fixation (212) assurant la fixation amovible de la protection thermique (210) au panneau support (208),
où pour chaque système de fixation (212), la protection thermique (210) présente un trou (307) qui la traverse,
où chaque système de fixation (212) comporte :
- une pièce femelle (302) logée dans le trou (307) correspondant, et présentant une embase (250) solidaire du panneau support (208) et une paroi cylindrique (252) délimitant un espace libre et ouvert à l'opposé du panneau support (208), où la paroi cylindrique (252) présente un épaulement (304) circulaire qui fait saillie vers l'intérieur de la paroi cylindrique (252), et
- une pièce mâle (306) comportant un fourreau (308) inséré dans la paroi cylindrique (252) et percé d'un alésage principal (254), un coulisseau (310) mobile en translation dans l'alésage principal (254) et une pluralité de billes (314), où pour chaque bille (314), le fourreau (308) présente un alésage secondaire (316) perpendiculaire à l'alésage principal (254) et qui débouche d'un premier côté dans ledit alésage principal (254) et d'un deuxième côté à l'extérieur du fourreau (308), où chaque bille (314) est placée dans l'alésage secondaire (316) correspondant et est mobile en translation le long dudit alésage secondaire (316) entre une position de verrouillage dans laquelle la bille (314) déborde au niveau du deuxième côté et une position de déverrouillage dans laquelle la bille (314) ne déborde pas au niveau du deuxième côté, où pour chaque bille (314), le coulisseau (310) comporte une alvéole (318) prenant la forme d'une demi-bille, et où le coulisseau (310) est mobile en translation entre une position de blocage dans laquelle le coulisseau (310) est dans une position telle que les alvéoles (318) ne sont pas en vis-à-vis des billes (314) et telle que les billes (314) sont forcées en position de verrouillage, et une position de déblocage dans laquelle le coulisseau (310) est dans une position telle que les alvéoles (318) sont en vis-à-vis des billes (314) autorisant les billes (314) à passer en position de déverrouillage et où la pièce mâle (306) comporte également un chapeau (312) solidaire du fourreau (308) et qui vient en appui contre la face de la protection thermique (210) du côté opposé à la surface de contact (209).

2. Ensemble selon la revendication 1, **caractérisé en ce que** le passage de la position de blocage à la position de déblocage du coulisseau (310) consiste en un enfoncement du coulisseau (310) dans le fourreau (308), **en ce que** le coulisseau (310) porte une butée (320) et le fourreau (308) présente une chambre dans laquelle se déplace la butée (320) et dont une face constitue une contre-butée (322) contre laquelle la butée (320) vient en appui en position de blocage, et **en ce que** le coulisseau (310) présente, en position de blocage, une extrémité qui dépasse du chapeau (312) et qui est traversée par un perçage (324) dans lequel un moyen de verrouillage (326) est inséré.

3. Ensemble selon l'une des revendications 1 ou 2, **caractérisé en ce que**, pour chaque pièce femelle (302), l'ensemble comporte une rondelle (328) de forme cylindrique qui s'emmanche sur la pièce femelle (302) pour combler l'espace entre le panneau support (208) et la protection thermique (210) au niveau du trou (307).

4. Ensemble selon l'une des revendications 1 ou 2, **caractérisé en ce que**, pour chaque pièce femelle (302), l'ensemble comporte un oeillet (602) qui est positionné le long des bords du trou (307) correspondant de la protection thermique (210), qui s'emmanche sur la paroi cylindrique (252) correspondante et vient en appui contre l'embase (250).

5. Ensemble selon l'une des revendications 1 ou 2, **caractérisé en ce que** chaque pièce mâle (306) est solidaire de la protection thermique (210).

6. Ensemble selon la revendication 5, **caractérisé en ce que**, pour chaque pièce femelle (302), l'ensemble comporte une rondelle (328) de forme cylindrique qui s'emmanche sur la pièce femelle (302) pour combler l'espace entre le panneau support (208) et la protection thermique (210) au niveau du trou (307), **en ce que** la protection thermique (210) comporte sur sa face orientée contre le chapeau (312), une plaque de soutien (704) collée sur ladite face et **en ce que** le chapeau (312) est fixé à l'oeillet (702) et à la plaque de soutien (704).

7. Ensemble selon la revendication 5, **caractérisé en ce que** la protection thermique (210) comporte sur sa face orientée contre le chapeau (312), une plaque de soutien (804) collée sur ladite face et **en ce que** le chapeau (312) est fixé à la plaque de soutien (704).

8. Ensemble selon l'une des revendications 1 à 7, **caractérisé en ce que** la pièce mâle (306) comporte un moyen de rappel (902) qui contraint le coulisseau (310) en position de blocage.

9. Nacelle (100) d'un turboréacteur double flux (106), ladite nacelle (100) comportant une structure interne fixe (202) et un ensemble selon l'une des revendications 1 à 8, où le panneau support (208) est un panneau de la structure interne fixe (202).

10. Aéronef (10) comportant au moins une nacelle (100) selon la revendication précédente.

## Patentansprüche

1. Anordnung, umfassend:
- eine Halteplatte (208) einer ortsfesten inneren Struktur (202) einer Gondel (100) eines Mantelstromtriebwerks (106),
- einen Wärmeschutz (210), der mit der Halteplatte (208) an einer Kontaktfläche (209) in Kontakt steht, und
- mehrere Befestigungssysteme (212), welche die lösbare Befestigung des Wärmeschutzes (210) an der Halteplatte (208) sicherstellen,
wobei für jedes Befestigungssystem (212) der Wärmeschutz (210) ein Loch (307) aufweist, das ihn durchquert,
wobei jedes Befestigungssystem (212) umfasst:
- ein Aufnahmeteil (302), das in dem entsprechenden Loch (307) aufgenommen ist und einen mit der Halteplatte (208) fest verbundenen Sockel (250) und eine zylindrische Wand (252), die einen freien und gegenüber der Halteplatte (208) offenen Raum begrenzt, aufweist, wobei die zylindrische Wand (252) einen kreisförmigen Ansatz (304) aufweist, der von der zylindrischen Wand (252) nach innen vorsteht, und
- ein Steckteil (306), das eine in die zylindrische Wand (252) eingesetzte und mit einer Hauptbohrung (254) versehene Hülse (308), ein in der Hauptbohrung (254) translatorisch bewegliches Gleitstück (310) und mehrere Kugeln (314) umfasst, wobei für jede Kugel (314) die Hülse (308) eine sekundäre Bohrung (316) aufweist, die zur Hauptbohrung (254) senkrecht ist und die auf einer ersten Seite in die Hauptbohrung (254) und auf einer zweiten Seite an der Außenseite der Hülse (308) mündet, wobei jede Kugel (314) in der entsprechenden sekundären Bohrung (316) angeordnet ist und entlang der sekundären Bohrung (316) translatorisch beweglich ist zwischen einer Verriegelungsposition, in der die Kugel (314) an der zweiten Seite herausragt, und einer Entriegelungsposition, in der die Kugel (314) nicht an der zweiten Seite herausragt, wobei für jede Kugel (314) das Gleitstück (310) eine halbkugelförmige Vertiefung (318) umfasst und wobei das Gleitstück (310) translatorisch beweglich ist zwischen einer Sperrposition, in der sich das Gleitstück (310) in einer solchen Position befindet, dass die Vertiefungen (318) nicht den Kugeln (314) gegenüberliegen und dass die Kugeln (314) in die Verriegelungsposition gezwungen werden, und einer Entsperrposition, in der sich das Gleitstück (310) in einer solchen Position befindet, dass die Vertiefungen (318) den Kugeln (314) gegenüberliegen und dabei den Kugeln (314) ermöglichen, in die Entriegelungsposition zu gelangen, und wobei das Steckteil (306) außerdem eine Kappe (312) umfasst, die mit der Hülse (308) fest verbunden ist und die an der Fläche des Wärmeschutzes (210) auf der der Kontaktfläche (209) gegenüberliegenden Seite zur Anlage kommt.

2. Anordnung nach Anspruch 1, **dadurch gekennzeichnet, dass** der Wechsel des Gleitstücks (310) aus der Sperrposition in die Entsperrposition in einem Eintreiben des Gleitstücks (310) in die Hülse (308) besteht, dadurch, dass das Gleitstück (310) einen Anschlag (320) trägt und die Hülse (308) eine Kammer aufweist, in der sich der Anschlag (320) bewegt und von der eine Fläche ein Widerlager (322) bildet, an dem der Anschlag (320) in der Sperrposition zur Anlage kommt, und dadurch, dass das Gleitstück (310) in der Sperrposition ein Ende aufweist, das über die Kappe (312) hinausragt und das von einer Bohrung (324) durchquert wird, in die ein Verriegelungsmittel (326) eingesetzt ist.

3. Anordnung nach einem der Ansprüche 1 oder 2, **dadurch gekennzeichnet, dass** für jedes Aufnahmeteil (302) die Anordnung eine runde Scheibe (328) von zylindrischer Form umfasst, die auf das Aufnahmeteil (302) aufgeschoben wird, um den Zwischenraum zwischen der Halteplatte (208) und dem Wärmeschutz (210) im Bereich des Lochs (307) auszufüllen.

4. Anordnung nach einem der Ansprüche 1 oder 2, **dadurch gekennzeichnet, dass** für jedes Aufnahmeteil (302) die Anordnung eine Öse (602) umfasst, die entlang der Ränder des entsprechenden Lochs (307) des Wärmeschutzes (210) positioniert ist, die auf die entsprechende zylindrische Wand (252) aufgeschoben wird und am Sockel (250) zur Anlage kommt.

5. Anordnung nach einem der Ansprüche 1 oder 2, **dadurch gekennzeichnet, dass** jedes Steckteil (306) mit dem Wärmeschutz (210) fest verbunden ist.

6. Anordnung nach Anspruch 5, **dadurch gekennzeichnet, dass** für jedes Aufnahmeteil (302) die Anordnung eine runde Scheibe (328) von zylindrischer Form umfasst, die auf das Aufnahmeteil (302) aufgeschoben wird, um den Zwischenraum zwischen der Halteplatte (208) und dem Wärmeschutz (210) im Bereich des Lochs (307) auszufüllen, dadurch, dass der Wärmeschutz (210) auf seiner der Kappe (312) zugewandten Fläche eine auf diese Fläche aufgeklebte Stützplatte (704) umfasst, und dadurch, dass die Kappe (312) an der Öse (702) und an der Stützplatte (704) befestigt ist.

7. Anordnung nach Anspruch 5, **dadurch gekennzeichnet, dass** der Wärmeschutz (210) auf seiner der Kappe (312) zugewandten Fläche eine auf diese Fläche aufgeklebte Stützplatte (804) umfasst, und dadurch, dass die Kappe (312) an der Stützplatte (704) befestigt ist.

8. Anordnung nach einem der Ansprüche 1 bis 7, **dadurch gekennzeichnet, dass** das Steckteil (306) ein Rückstellmittel (902) umfasst, welches das Gleitstück (310) in die Sperrposition vorspannt.

9. Gondel (100) eines Mantelstromtriebwerks (106), wobei die Gondel (100) eine ortsfeste innere Struktur (202) und eine Anordnung nach einem der Ansprüche 1 bis 8 umfasst, wobei die Halteplatte (208) eine Platte der ortsfesten inneren Struktur (202) ist.

10. Luftfahrzeug (10), welches mindestens eine Gondel (100) nach dem vorhergehenden Anspruch umfasst.

## Claims

1. Assembly comprising:
- a support panel (208) of an internal fixed structure (202) of a nacelle (100) of a turbofan (106),
- a thermal protection element (210) in contact with the support panel (208) at a contact surface (209), and
- a plurality of fastening systems (212) which removably fasten the thermal protection element (210) to the support panel (208),
wherein, for each fastening system (212), the thermal protection element (210) has a hole (307) passing through it,
wherein each fastening system (212) comprises:
- a female part (302) accommodated in the corresponding hole (307), and having a base (250) secured to the support panel (208) and a cylindrical wall (252) delimiting a free and open space in the direction away from the support panel (208), wherein the cylindrical wall (252) has a circular shoulder (304) which protrudes towards the interior of the cylindrical wall (252), and
- a male part (306) comprising a sleeve (308) inserted in the cylindrical wall (252) and pierced with a main bore (254), a slide (310) movable in translation in the main bore (254) and a plurality of balls (314), wherein, for each ball (314), the sleeve (308) has a secondary bore (316) which is perpendicular to the main bore (254) and which leads, on a first side, into said main bore (254) and, on a second side, to the exterior of the sleeve (308), wherein each ball (314) is placed in the corresponding secondary bore (316) and is movable in translation along said secondary bore (316) between a locking position, in which the ball (314) projects on the second side, and an unlocking position, in which the ball (314) does not project on the second side, wherein, for each ball (314), the slide (310) comprises a cavity (318) in the shape of a half-ball, and wherein the slide (310) is movable in translation between a blocking position, in which the slide (310) is in a position such that the cavities (318) are not opposite the balls (314) and such that the balls (314) are forced into the locking position, and an unblocking position, in which the slide (310) is in a position such that the cavities (318) are opposite the balls (314) allowing the balls (314) to pass into the unlocking position, and wherein the male part (306) also comprises a cap (312) secured to the sleeve (308) and which bears against the face of the thermal protection element (210) on the side opposite to the contact surface (209).

2. Assembly according to Claim 1, **characterized in that** the passage from the blocking position to the unblocking position of the slide (310) consists in pressing down the slide (310) in the sleeve (308), **in that** the slide (310) bears a stop (320) and the sleeve (308) has a chamber in which the stop (320) moves and a face of which constitutes a counter-stop (322) against which the stop (320) bears in the blocking position, and **in that** the slide (310) has, in the blocking position, an end which goes beyond the cap (312) and which is passed through by an orifice (324) in which a locking means (326) is inserted.

3. Assembly according to either of Claims 1 or 2, **characterized in that**, for each female part (302), the assembly comprises a cylindrical washer (328) which fits tightly on the female part (302) so as to fill the space between the support panel (208) and the thermal protection element (210) at the hole (307).

4. Assembly according to either of Claims 1 or 2, **characterized in that**, for each female part (302), the assembly comprises a grommet (602) which is positioned along the edges of the corresponding hole (307) of the thermal protection element (210), which fits tightly on the corresponding cylindrical wall (252) and which bears against the base (250).

5. Assembly according to either of Claims 1 or 2, **characterized in that** each male part (306) is secured to the thermal protection element (210).

6. Assembly according to Claim 5, **characterized in that**, for each female part (302), the assembly comprises a cylindrical washer (328) which fits tightly on the female part (302) so as to fill the space between the support panel (208) and the thermal protection element (210) at the hole (307), **in that** the thermal protection element (210) comprises, on its face oriented against the cap (312), a supporting plate (704) adhesively bonded to said face, and **in that** the cap (312) is fastened to the grommet (702) and to the supporting plate (704).

7. Assembly according to Claim 5, **characterized in that** the thermal protection element (210) comprises, on its face oriented against the cap (312), a supporting plate (804) adhesively bonded to said face, and **in that** the cap (312) is fastened to the supporting plate (704).

8. Assembly according to one of Claims 1 to 7, **characterized in that** the male piece (306) comprises a return means (902) which urges the slide (310) into the blocking position.

9. Nacelle (100) of a turbofan (106), said nacelle (100) comprising an internal fixed structure (202) and an assembly according to one of Claims 1 to 8, wherein the support panel (208) is a panel of the internal fixed structure (202).

10. Aircraft (10) comprising at least one nacelle (100) according to the preceding claim.
